# EUROPEAN PATENT SPECIFICATION

(11) **EP 2 232 436 B1**
(45) Date of publication and mention of the grant of the patent: **18.07.2018**
(21) Application number: 08862745.0
(22) Date of filing: 17.12.2008
(51) Int. Cl.: G06T 5/40, G06T 5/00

(54) **IMAGE PROCESSING APPARATUS AND METHOD WITH CONTRAST CORRECTION**
BILDVERARBEITUNGSVORRICHTUNG UND VERFAHREN ZUR KONTRASTKORREKTUR
APPAREIL DE TRAITEMENT D'IMAGE ET PROCÉDÉ DE CORRECTION DE CONTRASTE

(30) Priority: 17.12.2007 EP 07123397
(43) Date of publication of application: 29.09.2010
(73) Proprietor: Nederlandse Organisatie voor toegepast- natuurwetenschappelijk onderzoek TNO, 2595 DA 's-Gravenhage (NL)
(72) Inventor: DIJK, Judith, 2497 AN Den Haag (NL); SCHUTTE, Klamer, 2725 ES Zoetermeer (NL)
(74) Representative: V.O.
(86) International application number: PCT/NL2008/050812
(87) International publication number: WO 2009/078717

(56) References cited:
- HARRIS J L SR: "Constant variance enhancement: a digital processing technique" APPLIED OPTICS USA, vol. 16, no. 5, May 1977 (1977-05), pages 1268-1271, XP002480670 ISSN: 0003-6935
- CAPRA A ET AL: "Dynamic Range Optimization by Local Contrast Correction and Histogram Image Analysis" CONSUMER ELECTRONICS, 2006. ICCE '06. 2006 DIGEST OF TECHNICAL PAPERS. INTERNATIONAL CONFERENCE ON LAS VEGAS, NV, USA 07-11 JAN. 2006, PISCATAWAY, NJ, USA,IEEE, 7 January 2006 (2006-01-07), pages 309-310, XP010896628 ISBN: 978-0-7803-9459-9
- GUILLON S ET AL: "Robust nonlinear contrast enhancement filters" PROCEEDINGS OF THE INTERNATIONAL CONFERENCE ON IMAGE PROCESSING (ICIP) LAUSANNE, SEPT. 16 - 19, 1996; [PROCEEDINGS OF THE INTERNATIONAL CONFERENCE ON IMAGE PROCESSING (ICIP)], NEW YORK, IEEE, US, vol. 1, 16 September 1996 (1996-09-16), pages 757-760, XP010202176 ISBN: 978-0-7803-3259-1
- DURAND F ET AL: "Fast Bilateral Filtering for the Display of High-Dynamic-Range Images" ACM TRANSACTIONS ON GRAPHICS, ACM, NEW YORK, NY, US, vol. 21, no. 3, 1 July 2002 (2002-07-01), pages 257-266, XP002312495 ISSN: 0730-0301
- SCHUTTE K: "Multi-scale adaptive gain control of IR images" PROCEEDINGS OF THE SPIE - THE INTERNATIONAL SOCIETY FOR OPTICAL ENGINEERING SPIE-INT. SOC. OPT. ENG USA, vol. 3061, 1997, pages 906-914, XP002480668 ISSN: 0277-786X
- NARENDRA P M ET AL: "REAL-TIME ADAPTIVE CONTRAST ENHANCEMENT" IEEE TRANSACTIONS ON PATTERN ANALYSIS AND MACHINE INTELLIGENCE, IEEE SERVICE CENTER, LOS ALAMITOS, CA, US, vol. PAMI-03, no. 6, 1 November 1981 (1981-11-01), pages 655-661, XP008003619 ISSN: 0162-8828
- KETCHAM D J: "REAL-TIME IMAGE ENHANCEMENT TECHNIQUES" PROCEEDINGS OF THE SOCIETY OF PHOTO-OPTICAL INSTRUMENTATIONENGINEERS. APPLICATIONS OF DIGITAL IMAGE PROCESSING, vol. 74, 26 February 1976 (1976-02-26), pages 120-125, XP008033663

## Description

### Field of the invention

The invention relates to an image processing apparatus and method with contrast correction.

### Background

US patent No. 4,231,065 discloses a contrast enhancement scheme for a video display. A two dimensional recursive filter is used to obtain a moving average of the intensity variations in all areas of the display. This moving average is subtracted from the original signal to produce a signal which contains only local variations and this latter signal is expanded to increase the display contrast. Similar results can be obtained by known histogram equalization schemes. Herein, histograms of pixel values are computed for different areas, and from the histograms mapping functions are derived that map pixel values to enhanced values with optimal contrast.

This type of system increasingly expands the differences in intensity values when there is less intensity variation in the area over which the average or histogram is computed. Typically, the intensity variation may be an edge between different types of image regions. The weaker the edge, the more the differences are expanded, so that the edge becomes more clearly visible. Such enhancement schemes require the selection of a scale parameter that controls the size of the areas over which the moving average or histogram is formed. Dependent on the selected scale parameter, the results of contrast enhancement may differ. When the scale parameter increased so that there is a strong edge in the area, weaker edges will be insufficiently expanded. When the scale parameter decreased until there is no real edge in an area, noise will become dominantly visible. Usually, no single value of the scale parameter yields optimum results everywhere in an image.

K Schutte has proposed to perform averaging for a plurality of different scale parameter values in an article titled "Multi-scale adaptive gain control of IR images" and published at Infrared Technology and Applications XXIII, part of SPIE's Aerospace '97, April 21-25 1997, Orlando FL, SPIE Vol 3061.

However, irrespective of whether a multi-scale approach is used, it has been found that this type of contrast enhancement technique may sometimes lead to disturbing artefacts near the edges of large imaged objects.

Another type of contrast enhancement is disclosed by Min Chen et al. in an article titled "A multicurve tone mapping operator for the display of high dynamic range image and video" published in the 4th European conference on visual media production 2007 pages 1-7 (EPO reference XP002480669). Min Chen et al consider the problem of adapting pixel values to the abilities of visualization devices. Min Chen et al provide for a range of mapping functions that relate input pixel brightness values to output pixel brightness values. One type of mapping function involves gamma correction like functions, with gamma exponents selected based on maximum and minimum brightness values. Min Chen et al mention that the mapping function can be selected dependent on the average intensity of a block that contains the mapped pixel, although the exact method of selection is not disclosed. Min Chen et al note that artifacts may arise at the edges of the blocks and that this can be avoided by using a local average obtained by means of bilateral filtering to select the gamma exponent.

A similar gamma correction is disclosed by Alessandro Capra et al. in an article titled "Dynamic Range Optimization by Local Contrast Correction and Histogram Image Analysis", published in the Digest of Technical papers of the International Conference on Consumer Electronics 2006 ICCE '06, January 2006, Piscataway NJ, USA pages 309-310 (EPO reference XP010896628).

Capra et al discloses the use of a position dependent gamma correction exponent that is itself an exponent of an intensity of a blurred image at the position where the gamma correction is applied. Capra et al suggest using an edge preserving filter based on bilateral low pass techniques to determine the blurred image, in order to avoid halo artefacts in the enhanced image. Capra et al note that the image obtained by applying this gamma correction is not yet satisfying. This is corrected by a further step of contrast enhancement consisting of stretching and clipping piloted by image histogram properties.

Capra et al do not mention the edge preserving filter in the context of this stretching and clipping. The edge preserving filter is mentioned only for selection of gamma exponent values. Changing the gamma exponent has the effect of shifting the brightness value where the mapping function has a given slope. Capra's technique shifts this brightness value dependent on locally averaged brightness as obtained with edge preserving filtering, so that the local average is affected substantially only by pixels that belong to the same region as the corrected pixel. Thus, a halo effect is avoided wherein the pixels outside the region affect the gamma exponent near the edge of the region, which would make them differ from gamma exponents well within the region that depend only on the average of pixels inside the region.

In contrast to the average pixel values used in gamma correction, histogram based stretching uses the spread of pixel values to determine the slope of stretching. The spread is due to edges in the image and stretching aims to increase the step size of edges where they are small. Conventionally, one expects that operations that tend to eliminate the contributions across edges have no place in the determination of spread to control stretching. Accordingly, Capra et al do not mention the edge preserving filter in the context of stretching. In fact, it appears that they use a histogram for the entire image, which excludes the consideration of elimination of cross-edge effects. Constant variance enhancement is disclosed in an article by J.L. Harris et al, titled "Constant variance enhancement: a digital processing technique", published in Applied Optics USA vol 16 pages 1268-1271. Harris discloses a contrast correction using a mapping function that stretches or compresses pixel value variations from a range comprising an average pixel with a stretching factor. The average pixel value and the spread are computed as a local, weighted sum of pixel values and squared pixel value deviations. Harris mentions a 2-D Gaussian distribution for computing the weighted sums, as an example of a weighting function that is smooth and monotonic.

### Summary

Among others, it is an object to provide for contrast enhancement of images wherein disturbing artefacts near edges are reduced.

An image processing apparatus according to claim 1 is provided. Herein a pixel value mapper, such as a contrast corrector, is controlled by statistical data from a statistics collector. The pixel value mapper stretches or compresses pixel value variations with a stretching factor that is selected dependent on a local spread in pixel values at pixel locations in a neighborhood of the pixel location of which the pixel value is mapped. In an embodiment the statistics collector may estimate statistical data representing an average and standard deviation of pixel values in respective areas, the standard deviation being used to control the spread.

In the statistics of the neighborhood of a pixel location the contributions of particular ones of the surrounding pixel locations to the set of statistical data are weighted with reduced weight when gradients between the pixel location and the particular ones of surrounding pixel locations are larger. The effect of gradients may be accounted for, for example, using edge detecting filters, or by determining a difference between the pixel value of the respective pixel location and the pixel value for the particular one of the surrounding pixel locations. When no gradient is detected a higher weight is given. In this way, the effect of pixel locations beyond edges on pixel mapping is reduced.

In an embodiment the statistics collector comprises an edge preserving low pass filter arrangement, to compute the sets of statistical data. Thus for example edge preserving low pass filtering may be applied to squares of pixel values, or squares of deviations between and average value and the pixel value. This may be used to obtain a standard deviation with reduced contribution from pixel locations in the case of intervening gradients.

### Brief description of the drawing

These and other advantageous aspects will become apparent from a description of exemplary embodiments, using the following figures.
Figure 1 shows an image processing system
Figure 1a shows an image processing system
Figure 2 shows a statistics collector
Figure 3 shows an edge preserving filter
Figure 4 shows an image processing system
Figure 5 shows an image processing system

### Description of exemplary embodiments

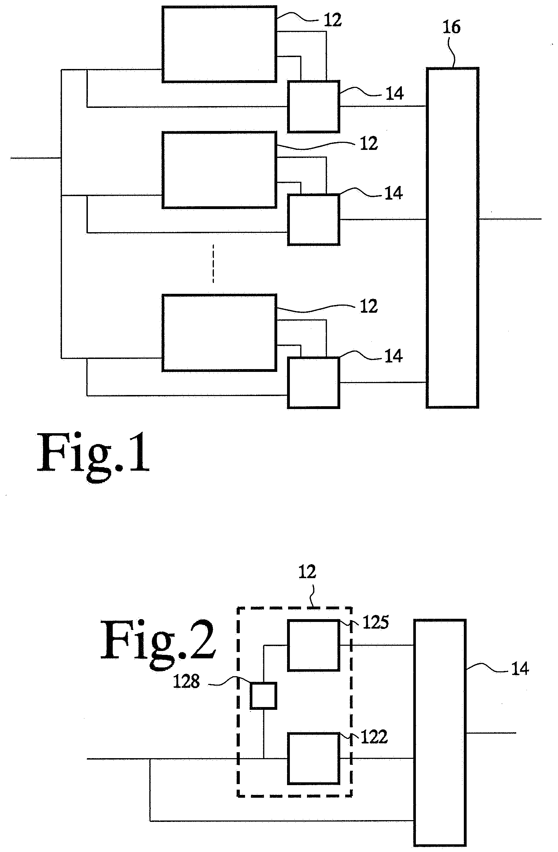

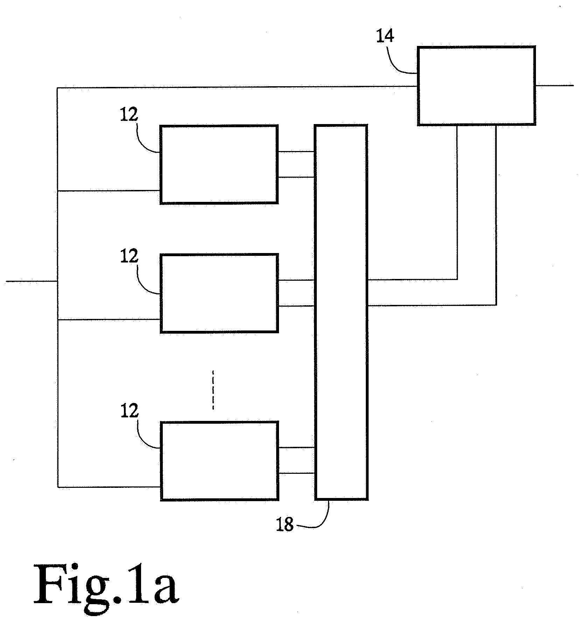

Figure 1 shows an image processing system comprising a plurality processing branches and combination unit 16. Each processing branch contains a statistics collector 12, a pixel value mapper in the form of a contrast corrector 14 and a combination unit 16.

In each branch an image input is coupled to the statistics estimator 12 of the branch. Outputs of the statistics collector 12 of the branch are coupled to control inputs the contrast corrector 14 of the branch. Furthermore, the contrast corrector 14 has an input coupled to the image input of the system. Outputs of the contrast correctors 14 of the branches are coupled to combination unit 16.

In operation statistics collectors 12 compute statistical parameters from spatial areas in received images. Each branch corresponds to a spatial area of a different spatial scale. The spatial scales may be selected for example at fixed ratio's, the first branch supporting a scale W, the second branch having a scale r*W, the third bandwidth having a scale r²*W. Herein that ratio r may be 2 or 3 for example. By way of example three branches are shown for three different scales, but two or more may be used for a corresponding number of different scales.

Statistics collectors 12 weigh contributions to the statistical parameter from different positions in an area according to whether a gradient is detected between the position and the centre of the area. In one embodiment the statistical data may comprise locally averaged intensities and locally averaged square intensities. The implementation of statistics collectors 12 of different branches may be similar to each other, except that each statistics collector 12 operates to collect statistical data from differently sized areas in the image, the sizes being selected in proportion to the scale of the branch to which the statistics estimator belongs.

Contrast corrector 14 uses the statistical data from statistics collectors 12 to determine pixel mapping functions, which it applies to the incoming image.

Combination unit 16 combines the images produced by contrast correctors 14. In a further embodiment combination unit 16 also combines these images with the original input image. In an embodiment, combination unit 16 is configured to add these images, but other ways of combining may be used, such as weighted adding, taking a median of pixels values from different images, or taking a maximum etc.

Figure 1a shows an alternative image processing system, wherein the contrast correction parameters are first combined in a parameter combination unit 18 and subsequently applied to a single contrast corrector 14, to correct the image in one step. In this case no image combination unit 16 is needed.

Figure 2 shows an embodiment of a statistics collector 12 comprising first and second edge preserving low pass filters 122, 125 and a squaring unit 128. Squaring unit 128 may be shared with the statistics collectors of other branches. The image input is coupled to an input of first edge preserving filter 122. The image input is coupled to an input of second edge preserving filter 125 via squaring unit 128. Outputs of first and second edge preserving filters 122, 125 are coupled to contrast corrector 14.

In operation first and second edge low pass preserving filters 122, 125 produce a spatial averaged M of intensity values I of pixels and spatially averaged squared intensity values I² respectively. This is repeated for successive pixel locations, each by averaging intensity values I and squared intensity values I² respectively, from an area including the pixel location at a predetermined position in the area. Contrast corrector 14 computes a standard deviation value S for the pixel locations from these values, i.e. a measure of the spread of the pixel values, and computes transformed output pixel values Q according to Q=M+F*(P-M)/S, wherein P represents input pixel values and F is an enhancement factor, also called the stretching factor. If this leads to output pixel values Q outside an allowable range, the values are clipped. Similarly, if the overall factor F/S is outside a predetermined range it may be clipped to a value at the edge of the range.

It should be appreciated that the contrast correction formula Q=M+F*(P-M)/S is only one example of a range of possible contrast correction formulas. As another example a formula Q=M+f((P-M)/S) may be used, wherein "f' is any increasing or function of (P-M)/S, or at most a generally increasing and locally flat function. For example a function f=[1+(P-M)/S]^{g}-1, or f=sign(P-M)*|(P-M)/S|^{g} may be used, where the exponent g may have any value. As another example a clipped function f may be used, which takes on a saturation value when (P-M)/S is more than a threshold distance from zero. For each formula, a stretching factor can be defined, which is the factor between small changes in the input pixel value P and the resulting changes in the output pixel value Q. The formulas have been chosen so that the stretching factor is proportional to S. This makes the stretching factor responsive to the image content.

Furthermore, it should be appreciated that the average and the standard deviation of intensity values are only one example of local statistical parameters that can be estimated to control contrast correction. Instead of intensity a color component or a combination of color components may be used. The standard deviation is a root of a weighted sum of square deviations of the average, which may be computed by summing the deviations, or summing squared pixel values and subsequently subtracting the effect of the average. In other embodiments a function of the deviations or of the pixel values may be used instead of the square, for example any even function of the deviations. For example, instead of an average of the square pixel value an average of a power Pⁿ of the intensity values, or another function, in a window may be used to estimate a scale parameter instead of the standard deviation. When this power is large, the effect is that the use of maxima and minima is approximated.

Instead of the average and standard deviation, a maximum MAX and minimum MIN of the intensity or color in a window may be determined. In this case a correction Q=M+f((P-M)/(MAX-MIN)) may be applied, where M=(MAX+MIN)/2. Herein MAX-MIN is used as a measure of the spread of the pixel values. The function f may be a factor (f=F*(P-M)/(MAX-MIN)) or some other generally increasing function that may be locally flat. In this embodiment the maximum and minimum may be a maximum and minimum of weighted deviations between pixel values of pixel locations in the window and a reference value. In this embodiment, the weights may be selected dependent on the gradient between the pixel location in the window and the pixel location for which the correction is determined, with weights that decrease with increasing gradient. The reference value may be a pixel value of the pixel location for which the correction is determined, or an average value, with may optionally be weighted.

Instead of the maximum and the minimum percentile functions may be used, taking the intensity values in a window at predetermined ranks according to size of the intensity values in the window. In this case, the contribution to the rank may be weighted according to the presence of a gradient. Thus for example, when instead of a maximum a value at a percentile rank "x" rank is used (i.e. with a fraction x of the pixel values in the window having higher rank), in the case of weighting a value may be used from a rank at which the sum of weights assigned to pixel locations with pixel values at higher ranks is x times the sum of weights assigned all pixel locations. A similar method can be used to select a ranked value instead of the minimum. These substitutes of the maximum and minimum may be used to determine the stretching factor in proportion to the spread indicated by these values.

In the embodiment of figure 1a the effect of the corrections from different branches is combined before correction of the image. Thus, for example if the correction of a pixel for each single branch is Q=M+F*(P-M)/S, with different M and S values for different branches, a composite correction may be defined that corresponds to substitution of the result Q of each branch in the input value P of the next branch. Together, such substitutions define a compound correction which is also of the form Q=M+F*(P-M)/S, with M and S dependent on the M and S values of the different branches. In this case these final M and S values may be used to correct the pixel value.

In one embodiment edge preserving low pass filters 122, 125 apply bilateral filtering. In another embodiment edge preserving filters 122, 125 apply anisotropic diffusion. Bilateral filtering is known per se from C. Tomasi and R. Manduchi, "Bilateral Filtering for Gray and Color Images", Proceedings of the 1998 IEEE International Conference on Computer Vision, Bombay, India. Anisotropic diffusion per se is known from an article titled "Scale space and edge detection using anisotropic diffusion", by P. Perona et al. and published in the IEEE transactions on pattern analysis and machine intelligence, Vol. 12 (July 1990) page 629-639.

When anisotropic diffusion is used, for example, edge preserving filters 122, 125 may be configured to compute the average in a series of iterative steps, wherein a series of successive processed images is formed. The initial processed image in this series is the input image, or its square. In each but the first processed image, the pixel value at respective pixel locations is the weighted sum of pixel values from the preceding processed image at pixel locations that surround the respective pixel location plus the pixel value from the preceding processed image at the respective pixel location. Herein the weight of a pixel values from each surrounding pixel location is taken dependent on the gradient size at the surrounding pixel location, or between the surrounding pixel location and the respective pixel location. The weight is taken as a function of the gradient that decreases towards zero with increasing gradient. Pixel values from the final image in the series are fed to contrast corrector 14.

When bilateral filtering is used, for example, edge preserving filters 122, 125 may be configured to compute the average for respective pixel locations each by weighted summing pixel values from surrounding pixel locations in an area surrounding the respective pixel location. Herein the weight used for a surrounding pixel location is made a function of the difference between the pixel value for the respective pixel location and the pixel value of the surrounding pixel location. The function decreases to zero with increasing difference between the pixel values. Additionally, the weight may depend on the distance between the respective pixel location and the surrounding pixel location.

This form of filtering may be applied both to pixel intensities and their squares. Alternatively, they may be applied to any other function of the pixel intensities or to color components. Also, when taking a percentile near the minimum or maximum, weights may be applied according to the presence of edges. In this case the intensity values from a window are ranked and a value is taken so that the sum of the weights of lower ranking values is equal to or next lower than a predetermined fraction of the sum of the weights of all values.

The use of edge preserving filtering to control contrast correction is based on the insight that perceivable artifacts arise near edges of large homogeneous image areas. On one hand contrast scaling parameters for such areas need to be computed from filtering at a large spatial scale, to prevent missing large scale contrasts. On the other hand such a large spatial scale conventionally also affects pixel values outside the object, which gives rise to artifacts. Thus, a large contrast across an edge of an image region may have the effect of reducing the stretching factor so much that image features within the region with smaller pixel value variations are made invisible. By using edge preserving filtering to estimate the statistical parameters for use in contrast enhancement, the effect of contrast enhancement is realized while reducing these artifacts. Because the effect of pixel values across edges is reduced, the reduction of the stretching factor due to the edge is reduced, which enhances the visibility of image features within the region.

It must be noted that this reduction of the effects of pixel value changes across edges on contrast enhancement is contrary to the conventional notion that contrast enhancement serves to make edges better visible. According to this conventional notion contrast across edges should be the first thing to include in the computation of contrast enhancement parameters, because edges would not be emphasized otherwise. The present concept of weighing statistics on the opposite side of an edge less, or not at all in the case of very strong edges, it is avoided that contrast could become perceptively overemphasized far from the edge. By using edge limiting, different statistics will be used on different sides of the edge. This prevents the overemphasis.

In the embodiment wherein contrast enhancement is performed at multiple spatial scales and the results for different scales are combined, it is ensured that edges between large regions are accounted for in the contrast enhancement. At first sight, it may seem that only a basic edge preserving filtering scale suffices to handle such edges, but it has been found that the use of a combination of multiple scales, even very large scales, improves the resulting enhanced images.

Edge preserving filters 122, 125 may be implemented in various ways. Filter output values of edge preserving filters 122, 125 represent averages of pixel values. Gradient detectors may be used to block or reduce contribution of input values for first pixel locations to an averaged output value for a second pixel location when a pixel value gradient is detected between a first pixel location and the second pixel location. The amount of reduction of the contribution may be controlled by the strength of the gradient.

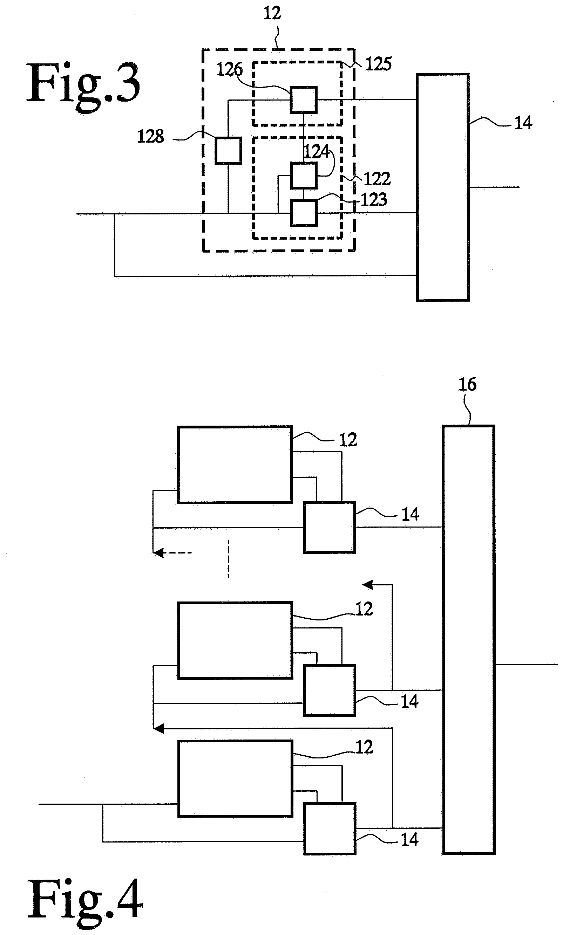

Figure 3 shows an embodiment of edge preserving filters 122, 125, comprising a weight selector 124 that comprises a gradient detector, and wherein each edge preserving filter 122, 125, furthermore comprises a controlled averager 123, 126. The image input is coupled to an input of weight selector 124 and controlled averager 123 of first edge preserving filter 122. Furthermore, the image input is coupled to an input of squaring unit 128, which has an output coupled to controlled averager 127 of second edge preserving filter 125. Weight selector 124, is coupled to further inputs of controlled averagers 123, 126. The control inputs of contrast correctors 14 are coupled to the outputs of controlled averagers 127.

In operation weight selector 124 determines gradient strengths in the filter image and selects weights dependent on the gradient strengths. An array of weights for locations surrounding a central pixel location is selected, dependent on the gradients strengths (e.g. the maximum gradient strength) between central pixel location and the surrounding pixel location for which the weight is selected. The weight is selected to decrease towards zero with increasing gradient strength. The selected weights are output to controlled averagers 127. Controlled averagers 127 average input values from image input and from squaring unit 128 respectively, to form averages for the central pixel location weighting contributions from the surrounding pixel locations according to the weights determined by weight selector 124.

Although a single weight selector 124 is shown, it should be realized that separate weight selectors may be used selecting the weights for example based on the input image and the output of squaring unit 128 respectively, for controlled averagers 123, 126 of first and second edge preserving filter 122, 125 respectively.

Although an embodiment has been described wherein different units are used to perform operations such as squaring and edge preserving filtering, it should be understood that the units may be realized by means of a programmable computer and corresponding programs of instruction stored in the program memory of the computer. Alternatively, dedicated hardware units may be used. Also the same unit may be used to perform a number of different edge preserving filtering operations.

Furthermore, although an embodiment has been described wherein the average intensity M and average squared intensity as a function of pixel position are computed as statistic parameters for controlling contrast correction, it should be understood that other statistical parameter may be used. For example, instead of the square of input image values, a square of a difference between the input image values and the average intensity values may be computed and used for determining an average variance. Instead of intensity values color components may be used or color vectors or any other vectors for pixel locations. In this case the average squares of components of the vectors may be computed for example.

Instead of the average and standard deviation of intensity values other statistical properties may be used, such as a histogram. In this case edge preserving filters 122, 125 may be replaced by other units, which compute the relevant statistical properties, limiting the contribution to the statistical property for a pixel location from other pixel locations when a gradient is detected between the pixel location and the other pixel locations. Thus for example, instead of edge preserving filters 122, 125 a statistics collector 12 may comprise a histogram computation unit, which is configured to compute a histogram of pixel values of surrounding pixels for each respective pixel location. In this case the histogram computation unit adds weighted counts to the histogram, with wherein the contribution of the surrounding pixel locations to the histogram is weighted according to detected edge strength between the respective pixel location and the surrounding pixel location. In this embodiment contrast corrector 14 may be configured to select the pixel mapping that is expected to transform the histogram in a direction towards a predetermined desired histogram. This involves introducing an effective stretching factor (a factor relating changes in input image values to changes in output image values). In histogram based contrast enhancement, this stretching factor depends on the spread as shown by the histogram, i.e. the degree to which the histogram is concentrated near a single value.

Figure 4 shows an embodiment wherein contrast correction in different branches is applied each time to the output of a preceding branch that performs statistical parameter estimation at a smaller scale. The smallest scale branch uses the original input image.

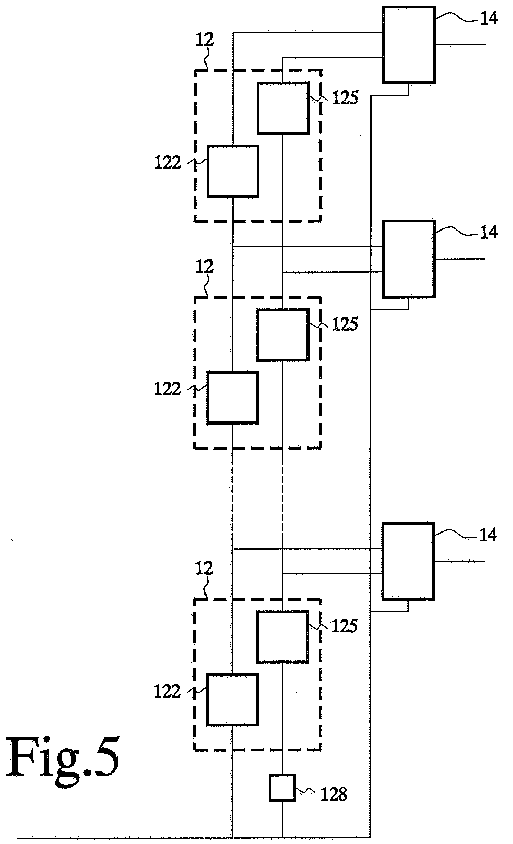

Figure 5 shows an embodiment wherein edge preserving filters 122, 125 are chained in two chains, one for averaging pixels and another for averaging squared pixels. Along a first chain, starting from the image input, edge preserving filters 122 for successively larger spatial scale are included for averaging intensity. Squaring unit 128 is coupled between the image input and the input of a second chain that contains, edge preserving filters 125 for averaging squared intensity at successively larger spatial scale, starting from the input. The chains are tapped to provide control signals for the outputs of the contrast correctors 14. Contrast correctors 14 may be coupled to a combination unit 16 (not shown). In another embodiment contrast correctors 14 may be chained, the contrast correctors 14 for respective spatial scales except the smallest spatial scale each correcting the contrast of the image produced by the contrast corrector for the next smaller spatial scale.

Although an embodiment has been shown wherein a plurality of branches is used, it should be appreciated that alternatively a single branch may be used. In this way a scale dependent contrast correction is obtained that is less prone to contain artefacts due to edges. Optionally the scale may be selected adaptively dependent on image content (e.g. inversely proportional to the spatial frequency at maximum spectral density). Use of a plurality of branches has the advantage that this makes the correction less sensitive to scale of objects in images.

Although all processing may be performed at the same spatial sampling rate, it should be appreciated that processing speed can be increased, or the demands on hardware can be reduced by sub-sampling at selected positions. In an embodiment each statistics collector 12 may sample statistical data only for sub-sampled positions in the image, at a sub-sample rate in proportion to the spatial scale of the branch to which the statistics estimator belongs. However, use of the same sample rate in all branches has been found to produce better results. Similarly, the pixel positions from which data is used to estimate the statistical parameters may be taken at the maximum sample rate or from sub-sampled pixel positions. In the embodiments of figure 4 and 5 for example, successive statistics collectors 12 along the chain may operate at successively lower sample rate.

Although an embodiment has been shown with a contrast corrector 14, it should be realized that pixel value mappers for any other pixel mapping may be used. For example, instead of contrast, other properties defined for an array of pixel locations such as color saturation, or depth information, may be corrected in this way. The pixel value mapper may be implemented in any way, for example as an arithmetic computation circuit for performing the relevant computations with the pixel value and the inputs from statistics collector 12 as parameters, or using a look-up memory, that is addressed by the pixel value and wherein mapped pixel values are written dependent on information from statistics collector 12, or by means of a program of instructions executed by a programmable processor to perform this type of mapping operations.

## Claims

1. An image processing apparatus, comprising
- a statistics collector (12), with a collector input for receiving pixel values derived from an input image and configured to collect sets of statistical data, the set of statistical data comprising an average pixel value and a pixel value spread, each for a respective pixel location in the input image, from the pixel values for surrounding pixel locations that surround the respective pixel location;
- a pixel value mapper (14) with an image input and control inputs for receiving the sets of statistical data and configured to map pixel values for the respective pixel locations from the image input, with mapping functions that are controlled by the sets of statistical data for the respective pixel locations, the mapping function stretching or compressing pixel value variations from a range containing said average pixel value for the surrounding pixel locations of the respective pixel locations for which the sets of statistical data have been collected and the mapping function comprising a stretching factor inversely proportional to said pixel value spread for the surrounding pixel locations of the respective pixel location with the weighted contributions, **characterized in that** the statistics collector (12) is configured to weigh contributions of particular ones of the surrounding pixel locations to the set of statistical data with a weight dependent on an input image gradient between the respective pixel location and the particular ones of surrounding pixel locations, increasing gradient size resulting in reduced weight.

2. An image processing apparatus according to claim 1, wherein the statistics collector comprises an edge preserving low pass filter arrangement, configured to compute the sets of statistical data by low pass filtering the pixel values derived from the input image and information that defines squares of the pixel values derived from the input image.

3. An image processing apparatus according to claim 1, wherein the pixel value mapper (14) is configured to stretch or compress pixel value variations from a range containing an average pixel value derived from the statistical data, with a factor inversely proportional to a standard deviation derived from the statistical data.

4. An image processing apparatus according to claim 1, wherein the statistics collector (12) and the pixel value mapper (14) are part of a first branch, the apparatus comprising a plurality of branches including the first branch, each respective branch comprising a respective statistics collector (12) and a respective pixel value mapper (14), each branch being associated with a respective spatial scale, the respective statistics collector (12) of the branches each being configured to collect sets of statistical data, each set for a respective pixel location in the input image, from the pixel values for surrounding pixel locations in a respective area that surrounds the respective pixel location, the respective areas of the statistics collectors (12) of different branches having mutually different sizes measured in the input image, in proportion to the scales associated with the branches, each pixel value mapper (14) providing for a respective mapping function to map pixel values for the respective pixel locations from the image input, the mapping function stretching or compressing pixel value variations from a range containing an average pixel value for the surrounding pixel locations of the respective pixel location locations for which the sets of statistical data of the branch of the pixel value mapper (14) have been collected and the mapping function comprising a stretching factor inversely proportional to a pixel value spread for the surrounding pixel locations of the respective pixel location with the weighted contributions of the branch of the pixel value mapper.

5. An image processing apparatus according to claim 4, wherein the statistics collectors (12) of the respective branches are coupled in a chain, each statistics collector (12), except for the statistics collector (12) associated with the smallest spatial scale, receiving the sets of statistical data from the statistics collector (12) associated with a next lower one of the spatial scales as input for the collection of statistics.

6. A computer-implemented method of processing an image, wherein a pixel value of an output image at a first pixel location is computed by applying a pixel value mapping function to a respective pixel value of an input image, the method comprising selecting the pixel value mapping function using the steps of
- collecting a set of statistical data, for the first pixel location in the input image, the set of statistical data comprising an average pixel value and a pixel value spread, from pixel values derived from the input image for surrounding pixel locations that surround the first pixel location;
- defining the pixel value mapping function for the first pixel location based on the set of statistical data for the first pixel location, the pixel value mapping function providing for stretching or compressing pixel value variations from a range containing said average pixel value for the surrounding pixel locations of the first pixel location for which the set of statistical data has been collected and the mapping function comprising a stretching factor inversely proportional to said pixel value spread for the surrounding pixel locations of the first location with the weighted contributions,
**characterized in that** contributions for respective ones of the surrounding pixel locations to the set of data are weighted with a weight dependent on an input image gradient between the first pixel location and the respective ones of the surrounding pixel locations, increasing gradient size resulting in reduced weight.

7. A method according to claim 6, wherein the step of collecting statistical data comprises performing edge preserving filtering operations on pixel values and information that defines squares of pixel values, the pixel value spread being determined from a result of the edge preserving filtering operations applied to the information that defines squares of pixel values.

8. A method according to claim 7, wherein the pixel value mapping function is defined to stretch or compress pixel value variations around an average pixel value derived from the statistical data with a factor inversely proportional to a standard deviation derived from the statistical data.

9. A method according to claim 8, comprising
- performing the step of collecting sets of statistical data for the first pixel location a plurality of times for mutually differently sized areas of surrounding pixel locations respectively,
- defining a plurality of pixel value mapping functions for the first pixel location, based on the sets of statistical data for the respective areas respectively;
- applying the plurality of pixel value mapping function to the first pixel value of the input image, or respective input images derived from a common source image.

## Patentansprüche

1. Bildverarbeitungsvorrichtung, umfassend
- einen Statistiksammler (12), mit einem Sammlereingang zum Empfangen von Pixelwerten, abgeleitet von einem Eingangsbild und konfiguriert zum Sammeln von Sätzen statistischer Daten, der Satz statistischer Daten umfassend einen durchschnittlichen Pixelwert und eine Pixelwertspanne, jeweils für eine entsprechende Pixelstelle in dem Eingangsbild, von den Pixelwerten für umgebende Pixelstellen, welche die entsprechende Pixelstelle umgeben;
- einen Pixelwert-Mapper (14) mit einem Bildeingang und Steuerausgängen zum Empfangen des Satzes statistischer Daten und konfiguriert zum Zuordnen von Pixelwerte für die jeweiligen Pixelstellen von dem Bildeingang, mit Mappingfunktionen, die von den Sätzen statistischer Daten für die jeweiligen Pixelstellen gesteuert werden, welche Mappingfunktion Pixelwertabweichungen von einem Bereich, der den durchschnittlichen Pixelwert für die umgebenden Pixelstellen der jeweiligen Pixelstellen, für die die Sätze statistischer Daten gesammelt wurden, dehnt oder komprimiert, und welche Mappingfunktion einen Dehnungsfaktor umfasst, der umgekehrt proportional ist zu der Pixelwertspanne für die umgebenden Pixelstellen der jeweiligen Pixelstelle mit den gewichteten Beiträgen, **dadurch gekennzeichnet, dass** der Statistiksammler (12) konfiguriert ist zum Gewichten von Beiträgen besonderer der umgebenden Pixelstellen zu dem Satz statistischer Daten mit einer Gewichtung, abhängig von einem Eingangsbildgradenten zwischen der jeweiligen Pixelstelle und den Besonderen der umgebenden Pixelstellen, was die Gradientengröße erhöht, resultierend in reduzierter Gewichtung.

2. Bildverarbeitungsvorrichtung nach Anspruch 1, wobei der Statistiksammler eine den Rand erhaltende Tiefpassfilteranordnung umfasst, konfiguriert zum Berechnen der Sätze statistischer Daten durch Tiefpassfilterung der Pixelwerte, abgeleitet von dem Eingangsbild, und Information, die die Quadrate der Pixelwerte, abgeleitet von dem Eingangsbild, definiert.

3. Bildverarbeitungsvorrichtung nach Anspruch 1, wobei der Pixelwert-Mapper (14) konfiguriert ist zum Dehnen oder Komprimieren von Pixelwertabweichungen von einem Bereich, der einen durchschnittlichen Pixelwert, abgeleitet von den statistischen Daten, enthält, mit einem Faktor, umgekehrt proportional zu einer Standardabweichung, abgeleitet von den statistischen Daten.

4. Bildverarbeitungsvorrichtung nach Anspruch 1, wobei der Statistiksammler (12) und der Pixelwert-Mapper (14) Teil eines ersten Zweigs sind, die Vorrichtung umfassend eine Vielzahl von Zweigen, einschließlich des ersten Zweigs, jeder entsprechende Zweig umfassend einen entsprechenden Statistiksammler (12) und einen entsprechenden Pixelwert-Mapper (14), jeder Zweig gehörend zu einer entsprechenden räumlichen Skala, der entsprechende Statistiksammler (12) der Zweige jeweils konfiguriert zum Sammeln von Sätzen statistischer Daten, jeder Satz für eine entsprechende Bildstelle in dem Eingangsbild, von den Pixelwerten für umgebende Pixelstellen in einem entsprechenden Bereich, der die entsprechende Pixelstelle umgibt, die entsprechenden Bereiche der Statistiksammler (12) von verschiedenen Zweigen mit voneinander verschiedenen Größen, gemessen in dem Eingangsbild, im Verhältnis zu den Skalen, gehörend zu den Zweigen, wobei jeder Pixelwert-Mapper (14) eine entsprechende Mapping-Funktion zum Zuordnen von Pixelwerten für die entsprechenden Pixelstellen von der Bildeingabe bereitstellt, wobei die Mappingfunktion Pixelwertabweichungen von einem Bereich, der einen durchschnittlichen Pixelwert für die umgebenden Pixelstellen der entsprechenden Pixelstellen, für die die Sätze statistischer Daten des Zweigs des Pixelwert-Mappers (14) gesammelt wurden, dehnt oder komprimiert, und wobei die Mappingfunktion einen Dehnungsfaktor umfasst, der umgekehrt proportional zu einer Pixelwertspanne für die umgebenden Pixelstellen der entsprechenden Pixelstelle mit den gewichteten Beiträgen des Zweigs des Pixelwert-Mappers ist.

5. Bildverarbeitungsvorrichtung nach Anspruch 4, wobei die Statistiksammler (12) der entsprechenden Zweige in einer Kette gekoppelt sind, wobei jeder Statistiksammler (12) mit Ausnahme des Statistiksammlers (12), der zu der kleinsten räumlichen Skala gehört, die Sätze statistischer Daten von dem Statistiksammler (12), gehörend zu einer nächstniedrigen der räumlichen Skalen, als Eingabe für das Sammeln von Statistiken empfängt.

6. Computerimplementiertes Verfahren zur Verarbeitung eines Bildes, wobei ein Pixelwert eines Ausgangsbildes an einer ersten Pixelstelle berechnet wird durch Anwenden einer Pixelwert-Mappingfunktion auf einen entsprechenden Pixelwert eines Eingangsbildes, das Verfahren umfassend das Auswählen der Pixelwert-Mappingfunktion unter Verwendung folgender Schritte:
- Sammeln eines Satzes statistischer Daten für die erste Pixelstelle in dem Eingangsbild, der Satz statistischer Daten umfassend einen durchschnittlichen Pixelwert und eine Pixelwertspanne, von Pixelwerten, abgeleitet von dem Eingangsbild für umgebende Pixelstellen, die die erste Pixelstelle umgeben;
- Definieren der Pixelwert-Mappingfunktion für die erste Pixelstelle auf der Basis des Satzes statistischer Daten für die erste Pixelstelle, welche Pixelwert-Mappingfunktion für das Dehnen oder Komprimieren von Pixelwertabweichungen von einem Bereich, enthaltend den durchschnittlichen Pixelwert für die umgebenden Pixelstellen der ersten Pixelstelle, für die der Satz statistischer Daten gesammelt wurde, sorgt, und welche Mappingfunktion einen Dehnungsfaktor umfasst, der umgekehrt proportional ist zu der Pixelwertspanne für die umgebenden Pixelstellen mit den gewichteten Beiträgen,
**dadurch gekennzeichnet, dass** Beiträge für entsprechende der umgebenden Pixelstellen zu dem Satz von Daten gewichtet werden mit einer Gewichtung, abhängig von einem Eingangsbildgradienten zwischen der ersten Pixelstelle und der entsprechenden der umgebenden Pixelstellen, was de Gradientengröße erhöht, resultierend in reduzierter Gewichtung.

7. Verfahren nach Anspruch 6, wobei der Schritt des Sammelns statistischer Daten die Durchführung von den Rand erhaltenden Filtervorgängen an Pixelwerten umfasst und Information, die Quadrate von Pixelwerten definiert.

8. Verfahren nach Anspruch 7, wobei die Pixelwert-Mappingfunktion definiert ist zum Dehnen oder Komprimieren von Pixelwertabweichungen um einen durchschnittlichen Pixelwert herum, abgeleitet von den statistischen Daten, mit einem Faktor, der umgekehrt proportional ist zu einer Standardabweichung, abgeleitet von den statistischen Daten.

9. Verfahren nach Anspruch 8, umfassend
- das Durchführen des Schritts, in dem eine Vielzahl von Malen Sätze statistischer Daten gesammelt werden für Pixelstellen für voneinander verschieden große Bereiche jeweils umgebender Pixelstellen,
- das Definieren einer Vielzahl von Pixelwert-Mappingfunktionen für die erste Pixelstelle auf der Basis der Sätze statistischer Daten für die jeweils entsprechenden Bereiche;
- das Anwenden der Vielzahl von Pixelwert-Mappingfunktionen auf den ersten Pixelwert des Eingangsbildes oder entsprechende Eingangsbilder, abgeleitet von einem gemeinsamen Quellbild.

## Revendications

1. Appareil de traitement d'image, comprenant
- un collecteur de statistiques (12), ayant une entrée de collecteur pour recevoir des valeurs de pixel dérivées d'une image d'entrée et configuré pour collecter des ensembles de données statistiques, l'ensemble de données statistiques comprenant une valeur de pixel moyenne et une étendue de valeurs de pixel, chacune pour un emplacement de pixel respectif dans l'image d'entrée, à partir des valeurs de pixel pour des emplacements de pixel environnants qui entourent l'emplacement de pixel respectif ;
- un mappeur de valeurs de pixel (14) ayant une entrée d'image et des entrées de commande pour recevoir les ensembles de données statistiques et configuré pour mapper des valeurs de pixel pour les emplacements de pixel respectifs provenant de l'entrée d'image, ayant des fonctions de mappage qui sont commandées par les ensembles de données statistiques pour les emplacements de pixel respectifs, la fonction de mappage étirant ou comprimant des variations de valeur de pixel par rapport à une plage contenant ladite valeur de pixel moyenne pour les emplacements de pixel environnants des emplacements de pixel respectifs pour lesquels les ensembles de données statistiques ont été collectés et la fonction de mappage comprenant un facteur d'étirement inversement proportionnel à ladite étendue de valeurs de pixel pour les emplacements de pixel environnants de l'emplacement de pixel respectif avec les contributions pondérées,
**caractérisé en ce que** le collecteur de statistiques (12) est configuré pour pondérer des contributions d'emplacements particuliers des emplacements de pixel environnants à l'ensemble de données statistiques avec une pondération dépendante d'un gradient d'image d'entrée entre l'emplacement de pixel respectif et les emplacements particuliers d'emplacements de pixel environnants, une taille de gradient croissante ayant pour résultat une pondération réduite.

2. Appareil de traitement d'image selon la revendication 1, dans lequel le collecteur de statistiques comprend un arrangement de filtre passe-bas à préservation des bords, configuré pour calculer les ensembles de données statistiques par filtrage passe-bas des valeurs de pixel dérivées de l'image d'entrée et d'informations qui définissent des carrés de valeurs de pixel dérivées de l'image d'entrée.

3. Appareil de traitement d'image selon la revendication 1, dans lequel le mappeur de valeurs de pixel (14) est configuré pour étirer ou comprimer des variations de valeur de pixel par rapport à une plage contenant une valeur de pixel moyenne dérivée des données statistiques, à l'aide d'un facteur inversement proportionnel à un écart-type dérivé des données statistiques.

4. Appareil de traitement d'image selon la revendication 1, dans lequel le collecteur de statistiques (12) et le mappeur de valeurs de pixel (14) font partie d'une premier branche, l'appareil comprenant une pluralité de branches comprenant la première branche, chaque branche respective comprenant un collecteur de statistiques respectif (12) et un mappeur de valeurs de pixel respectif (14), chaque branche étant associée à une échelle spatiale respective, le collecteur de statistiques respectif (12) des branches étant chacun configuré pour collecter des ensembles de données statistiques, chaque ensemble pour un emplacement de pixel respectif dans l'image d'entrée, à partir des valeurs de pixel pour des emplacements de pixel environnants dans une zone respective entourant l'emplacement de pixel respectif, les zones respectives des collecteurs de statistiques (12) de différentes branches ayant des tailles mutuellement différentes mesurées dans l'image d'entrée, proportionnelles aux échelles associées aux branches, chaque mappeur de valeurs de pixel (14) fournissant une fonction de mappage respective pour mapper des valeurs de pixel pour les emplacements de pixel respectifs à partir de l'entrée d'image, la fonction de mappage étirant ou comprimant des variations de valeur de pixel par rapport à une plage contenant une valeur de pixel moyenne pour les emplacements de pixel environnants des emplacements de pixel respectifs pour lesquels les ensembles de données statistiques de la branche du mappeur de valeurs de pixel (14) ont été collectés et la fonction de mappage comprenant un facteur d'étirement inversement proportionnel à une étendue de valeurs de pixel pour les emplacements de pixel environnants de l'emplacement de pixel respectif avec les contributions pondérées de la branche du mappeur de valeurs de pixel.

5. Appareil de traitement d'image selon la revendication 4, dans lequel les collecteurs de statistiques (12) des branches respectives sont couplés dans une chaîne, chaque collecteur de statistiques (12), sauf le collecteur de statistiques (12) associé à la plus petite échelle spatiale, recevant les ensembles de données statistiques en provenance du collecteur de statistiques (12) associés à l'échelle plus petite suivante des échelles spatiales en tant qu'entrée pour la collecte de statistiques.

6. Méthode implémentée par ordinateur de traitement d'une image, dans laquelle une valeur de pixel d'une image de sortie à un premier emplacement de pixel est calculée en appliquant une fonction de mappage de valeurs de pixel à une valeur de pixel respective d'une image d'entrée, la méthode comprenant la sélection de la fonction de mappage de valeurs de pixel en utilisant les étapes consistant à
- collecter un ensemble de données statistiques, pour le premier emplacement de pixel dans l'image d'entrée, l'ensemble de données statistiques comprenant une valeur de pixel moyenne et une étendue de valeurs de pixel, à partir de valeurs de pixel dérivées de l'image d'entrée pour des emplacements de pixel environnants qui entourent le premier emplacement de pixel ;
- définir la fonction de mappage de valeurs de pixel pour le premier emplacement de pixel sur la base de l'ensemble de données statistiques pour le premier emplacement de pixel, la fonction de mappage de valeurs de pixel permettant d'étirer ou de comprimer des variations de valeur de pixel par rapport à une plage contenant ladite valeur de pixel moyenne pour les emplacements de pixel environnants du premier emplacement de pixel pour lesquels l'ensemble de données statistiques a été collecté et la fonction de mappage comprenant un facteur d'étirement inversement proportionnel à ladite étendue de valeurs de pixel pour les emplacements de pixel environnants du premier emplacement à l'aide des contributions pondérées,
**caractérisée en ce que** des contributions pour des emplacements respectifs des emplacements de pixel environnants à l'ensemble de données sont pondérées à l'aide d'une pondération dépendante d'un gradient d'image d'entrée entre le premier emplacement de pixel et les emplacements respectifs des emplacements de pixel environnants, une taille de gradient croissante ayant pour résultat une pondération réduite.

7. Méthode selon la revendication 6, dans laquelle l'étape de collecte de données statistiques comprend d'effectuer des opérations de filtrage à préservation des bords sur des valeurs de pixel et des informations qui définissent des carrés de valeurs de pixel, l'étendue de valeurs de pixel étant déterminée à partir d'un résultat des opérations de filtrage à préservation des bords appliquées aux informations qui définisent des carrés de valeurs de pixel.

8. Méthode selon la revendication 7, dans laquelle la fonction de mappage de valeurs de pixel est définie pour étirer ou comprimer des variations de valeur de pixel autour d'une valeur de pixel moyenne dérivée des données statistiques à l'aide d'un facteur inversement proportionnel à un écart type dérivé des données statistiques.

9. Méthode selon la revendication 8, comprenant
- d'effectuer l'étape consistant à collecter des ensembles de données statistiques pour le premier emplacement de pixel une pluralité de fois pour des zones de tailles mutuellement différentes d'emplacements de pixel environnants, respectivement,
- de définir une pluralité de fonctions de mappage de valeurs de pixel pour le premier emplacement de pixel, sur la base des ensembles de données statistiques pour les zones respectives, respectivement ;
- d'appliquer la pluralité de fonctions de mappage de valeurs de pixel à la première valeur de pixel de l'image d'entrée, ou d'images d'entrée respectives dérivées d'une image source commune.
